**Europäisches Patentamt**

**European Patent Office**

**Office européen des brevets**

(19)

(11) Numéro de publication : **0 431 142 B1**

(12) **FASCICULE DE BREVET EUROPEEN**

(45) Date de publication du fascicule du brevet :
02.12.92 Bulletin 92/49

(51) Int. Cl.⁵ : **F16L 11/16, F16L 11/08**

(21) Numéro de dépôt : **90910761.7**

(22) Date de dépôt : **29.06.90**

(86) Numéro de dépôt international :
**PCT/FR90/00497**

(87) Numéro de publication internationale :
**WO 91/00467 10.01.91 Gazette 91/02**

(54) **TUBE FLEXIBLE COMPORTANT AU MOINS UN ELEMENT ALLONGE DE RENFORT AYANT UN PROFIL EN T.**

(30) Priorité : **30.06.89 FR 8908854**

(43) Date de publication de la demande :
**12.06.91 Bulletin 91/24**

(45) Mention de la délivrance du brevet :
**02.12.92 Bulletin 92/49**

(84) Etats contractants désignés :
**BE DE ES FR GB IT NL SE**

(56) Documents cités :
**WO-A-89/11057**
**FR-A- 2 417 707**
**FR-A- 2 561 745**
**FR-A- 2 590 646**
**GB-A- 959 160**

(73) Titulaire : **INSTITUT FRANCAIS DU PETROLE**
**4, avenue de Bois-Préau**
**F-92502 Rueil-Malmaison (FR)**
Titulaire : **COFLEXIP**
**23 Avenue de Neuilly**
**F-75116 Paris (FR)**

(72) Inventeur : **FERET, Jany**
**14, avenue de l'Europe**
**F-78160 Marly-le-Roy (FR)**
Inventeur : **MALLEN HERRERO, José**
**29, boulevard des Batignolles**
**F-75008 Paris (FR)**

(74) Mandataire : **Andreeff, François et al**
**INSTITUT FRANCAIS DU PETROLE 4, avenue**
**de Bois-Préau**
**F-92502 Rueil-Malmaison (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un tube flexible comportant un élément allongé de renfort ayant une section droite en forme de "T".

Selon l'art antérieur, les profils de renfort de forme applatie utilisés pour les tubes flexibles, soit sont en forme de "S" ou "Z" et sont alors difficiles à fabriquer et à être mis en place de façon précise et stable en enroulement hélicoïdal, soit sont en forme de "U" et, dans ce dernier cas, ne présentent pas des performances optimum à épaisseur de couche donnée. En effet, l'épaisseur du profil en "U" nécessite d'être affaiblie pour pouvoir recevoir les bras des "U" des enroulements adjacents.

Des profils applatis en "U" sont illustrés dans le brevet antérieur FR-2.561.745.

Dans le présent texte, un élément allongé de renfort pourra être désigné par les termes d'"élément profilé" ou de "profilé".

La présente invention concerne un tube flexible armé comportant un élément de renfort allongé facile à fabriquer à être mis en place, stable une fois en place et permettant une bonne optimisation de performance à épaisseur de couche donnée.

De plus, le profil suivant l'invention évite ou réduit les pressions de contact entre éléments de renfort adjacent tel qu'on peut les observer dans le cas des profils en "Z" ou "S".

De plus, le dispositif selon l'invention ne nécessite pas l'utilisation d'une multitude d'anneaux.

D'une façon générale, la présente invention concerne un tube flexible armé comportant au moins un élément de renfort allongé.

Selon l'invention, l'élément allongé a une section droite, ou profil, présentant une forme de "T", et est enroulé hélicoïdalement.

Cet élément allongé en forme de "T" pourra être métallique.

Un bord au moins de l'élément allongé pourra avoir une forme adaptée à coopérer avec une forme complémentaire pour réaliser un accrochage.

La forme complémentaire pourra être portée par le bord d'un autre élément allongé ayant une section droite présentant une forme de "T", cet élément étant monté en sens inverse.

La forme complémentaire pourra être portée par le bord d'un élément allongé pouvant être métallique, ayant une section droite présentant une forme de "U". L'élément allongé en "U" pourra être placé de façon à ce que les branches du,"U" soient dirigées vers l'extérieur, ou de façon à ce que les branches dudit "U" soient dirigées vers l'axe du tube, l'élément allongé en "T" étant alors placé de la façon appropriée.

Lorsque les branches de l'élément en "U" sont dirigées vers l'axe du tube (c'est-à-dire que l'élément en "U" est situé à l'extérieur relativement à l'élément en "T" avec lequel il coopère), son rôle pourra se limiter au maintien en position des fils en "T" adjacents. Dans ce cas, ce sont les éléments en "T" qui encaissent l'essentiel des efforts dus à la pression interne et le profil en "U" peut être dimensionné en conséquence, c'est-à-dire que la surface de la section du "U" peut être réduite par rapport à celle du "T".

L'élément en "U" pourra être en plastique ou en acier ou en aluminium.

Le tube selon l'invention pourra comporter deux éléments allongés ayant chacun une section droite présentant une forme de "T", ces éléments étant enroulés hélicoïdalement dans le même sens, le premier ayant sa partie de la section droite correspondant au pied du "T" dirigée vers l'axe du tube et la partie similaire du deuxième élément étant dirigée dans le sens opposé.

Ces deux éléments allongés pourront avoir des profils en "T" de même hauteur.

Le premier et le deuxième éléments allongés pourront avoir la même forme de section, c'est-à-dire les sections pourront avoir les mêmes dimensions.

Le premier et le deuxième éléments allongés pourront être métalliques.

Le premier élément allongé pourra avoir un module d'élasticité plus faible que celui du deuxième élément.

Le premier et le deuxième éléments allongés pourront avoir le même module d'élasticité.

La largeur de la partie du premier élément correspondant au pied du "T" pourra être supérieure à la largeur de la partie similaire du deuxième élément.

Le premier et le deuxième éléments allongés pourront être réalisés et dimensionnés pour qu'ils aient même allongement sous la mise en pression interne du tube, sans qu'il y ait de transfert d'effort important de l'un à l'autre desdits éléments par les bords respectifs de chacun de ces éléments.

Le tube selon l'invention pourra comporter de l'aluminium et/ou de l'acier. Notamment, au moins l'un des éléments allongés ayant un profil en "T" pourra être constitué ou comporter du métal, tel de l'acier ou un alliage d'aluminium.

Au moins un élément de renfort allongé pourra comporter essentiellement de l'aluminium ou un alliage d'aluminium.

Le rapport de la longueur (l) du bras du "T" à la hauteur (e) du "T" pourra être compris entre 0,5 et 1 et être préférentiellement compris entre 0,66 et 1.

Le rapport de la largeur du pied (P) à la longueur du bras (l) pourra être compris entre 1 et 3.

Le rapport de la largeur du pied (P) à la hauteur du "T" (e) pourra être compris entre 0,66 et 3.

Le rapport de la largeur (L) de la tête du "T" à la hauteur (e) du "T" pourra être compris entre 1,66 et 5.

La largeur (L) de la tête du "T" sera ci-après désignée par largeur (L) du "T".

Le rapport de la hauteur (h) d'un bras à la hauteur du "T" (e) pourra être compris entre 0,66 et 0,83.

Le rapport de la hauteur d'un lobe du bras C à la hauteur (e) du "T" pourra être compris entre 0,16 et 0,66 et être préférentiellement voisin de 0,33.

Le rapport du jeu radial entre deux "T" emboîtés tête-bêche l'un dans l'autre à la largeur du "T" pourra être compris entre 2 % et 10 %.

Le tube selon l'invention pourra comporter une armure de résistance à la pression interne ou voûte comportant au moins un élément allongé ayant un profil en forme de "T".

Le tube selon l'invention pourra comporter un profil en "T" présentant un angle d'armage sensiblement supérieur à 80° et de préférence à 85°, par rapport à l'axe du flexible.

Le tube selon l'invention pourra comporter au moins une nappe de renfort et une gaine d'étanchéité interne venant prendre appui sur ladite nappe que l'on désignera également par nappe interne. Cette nappe interne pourra comporter une pluralité d'éléments allongés ayant un profil en "T". Cette nappe interne pourra comporter des moyens d'accrochage axiaux.

Le tube selon l'invention pourra comporter plusieurs nappes de renfort et parmi ces nappes, seule la nappe interne pourra comporter des moyens d'accrochage axiaux.

Le tube selon l'invention pourra comporter deux nappes de renfort dont l'une correspond à ladite nappe interne, les éléments allongés de ladite nappe interne pourront être enroulés sous un premier angle dans un premier sens relativement à l'axe du tube, et les éléments allongés de la deuxième nappe pourront être enroulés sous un deuxième angle en sens opposé, et l'un desdits angles pourra être supérieur ou sensiblement égal à 55° et l'autre pourra être inférieur ou sensiblement égal à 55°.

Le tube selon l'invention pourra comporter deux paires de nappes, l'une de ces nappes correspondant à ladite nappe interne, chacune des nappes d'une même paire comportant des éléments de renfort allongés enroulés sous des angles égaux, mais de sens opposé, et ledit angle de l'une desdites paires pourra être supérieure ou sensiblement égale à 55° et l'angle de l'autre paire pourra être inférieure ou sensiblement égale à 55°.

La présente invention concerne également un fils ou élément allongé pour la fabrication de tubes flexibles, ledit fils ayant un profil en "T".

La matière du fils selon l'invention, ou la géométrie du profil de ce fils pourra correspondre à celle décrite dans les pages précédentes et relative à l'élément allongé.

Le tube selon l'invention pourra comporter une carcasse interne de résistance à la pression externe comportant au moins un élément allongé ayant un profil en forme de "T".

La présente invention concerne avantageusement les structures de flexibles armés "multinappes" comprennant principalement :

- une armure de résistance à la pression comprenant une ou plusieurs nappes d'anneaux ou de fils, câbles ou profilés enroulés sous un angle élevé par rapport à l'axe du flexible (cet angle pouvant dépasser 80 ou 85°), cet angle étant considéré par rapport à l'axe du flexible,

- une armure de résistance à la traction comprenant au moins deux nappes et de préférence un ou plusieurs couples de nappes croisées de fils, câbles ou profilés enroulés généralement sous un angle inférieur ou voisin de 55°, cet angle ne devant pas cependant être trop faible pour préserver la flexibilité de la conduite,

- une armure intérieure dite carcasse interne résistant en particulier aux efforts d'écrasement, elle est généralement constituée par une nappe d'enroulement hélicoïdal d'un profilé sous un angle élevé.

Ces différentes nappes peuvent être disposées dans un ordre quelconque de l'intérieur à l'extérieur de la structure du flexible, et être séparées ou non par des gaines plastiques de faible épaisseur.

De telles structures ont été, par exemple, décrites dans le brevet FR-1.417.966.

Il convient de noter que le profil en "T" selon l'invention ne présente pratiquement pas de phénomène de tuilage, c'est-à-dire qu'une fois en place sur le flexible, il n'a pas tendance à vriller sur lui-même. Ceci permet, notamment, l'utilisation d'une simple armeuse pour la mise en place du profil en "T" sur le flexible.

La pose du "T" en spiralage, pouvant se faire sans tuilage, on peut également réaliser un flexible sans armure de traction, l'effet de fond longitudinal étant repris au niveau de l'agrafage. Bien entendu, ce flexible, pour chaque diamètre considéré, serait limité en pression de service.

Par ailleurs, la présente invention concerne également les flexibles comportant au moins un élément allongé ayant une section droite en forme de "T" posé à tous les angles d'armage y compris 55°. Ceci est possible, notamment, du fait que le profil en "T" ne présente pratiquement pas de problème de tuilage.

De ce fait, il est possible d'envisager l'augmentation des pressions de service des flexibles à deux nappes d'armure, par limitations des jeux dans la nappe en contact avec la gaine d'étanchéité.

Enfin, le profil en "T" permet d'utiliser des largeurs de profil (c'est-à-dire longueur de la barre transversale du "T") plus grande que celle autorisée par d'autres profils, tels le "S" et le "Z".

Le profil en "T" pourra présenter un angle d'armage sensiblement supérieur à 80° et de préférence à 85°, par rapport à l'axe du flexible. Dans ce cas, la résistance aux efforts axiaux est principalement assurée par les armures de résistance à la traction.

Le tube pourra comporter un élément allongé ayant un profil en "T" et cet élément allongé pourra être enroulé sous un angle voisin de 55°, considéré par rapport à l'axe du flexible.

Le tube pourra comporter deux nappes de renfort, dont au moins une comportera une pluralité d'éléments allongés ayant un profil en "T" enroulé sous un angle de 55° dans un premier sens par rapport à l'axe du tube. Cette première nappe comportera également une pluralité d'éléments allongés complémentaires à ceux mentionnés ci-dessus ayant éventuellement un profil en "T". L'autre nappe comportera une pluralité d'éléments allongés enroulés sous un angle de 55° dans le sens opposé par rapport au sens de la première nappe.

Les angles de chacune des nappes du couple de nappes pourront ne pas être symétriques par rapport à l'axe du flexible.

Dans ce cas, l'angle d'enroulement d'une nappe pourra être supérieur à 55° et l'autre inférieur à 55°, ces angles étant considérés par rapport à l'axe du tube.

Avantageusement, l'élément allongé ayant un profil en "T" pourra être utilisé pour constituer l'armure de résistance à la pression et/ou la carcasse interne.

Les figures ci-annexées montrent des conduites flexibles armées auxquelles s'applique l'invention, ainsi que des exemples particuliers nullement limitatifs de profils d'éléments allongés :
- la figure 1 illustre un premier type de conduites flexibles armées,
- les figures 2 et 3 représentent d'autres types de conduites,
- la figure 4 représente un exemple de configuration de section droite ou d'un élément allongé selon l'invention,
- les figures 5 à 7 montrent différents agencements de profils.
- la figure 8 concerne un flexible comportant une armure de renfort comportant deux nappes d'éléments allongés enroulées sous un angle de 55° par rapport à l'axe du flexible, respectivement, de part et d'autre de cet axe, et
- la figure 9 concerne un mode de réalisation d'un flexible comportant un couple de nappes dissymétriques dans leurs sens d'enroulement.

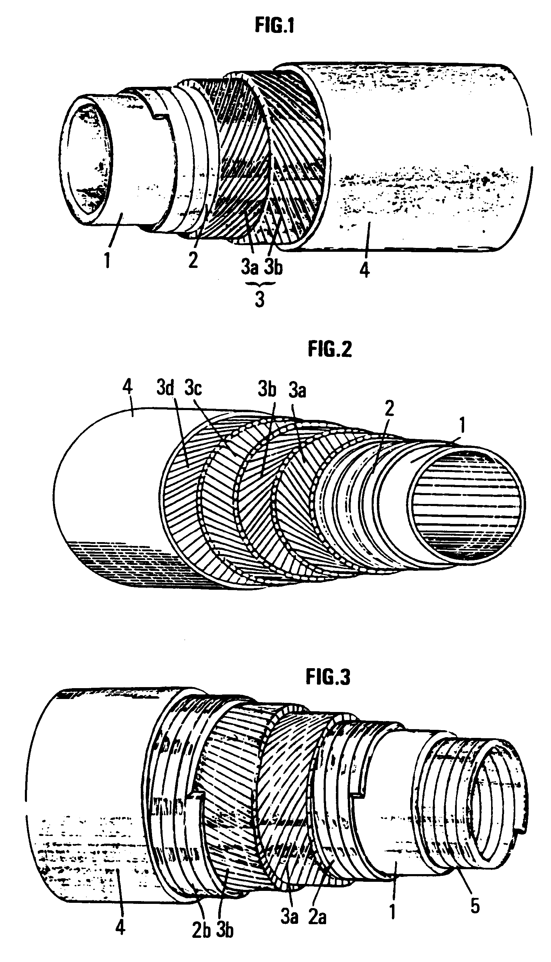

Sur la figure 1, la référence 1 désigne un conduit interne pouvant être constitué en matière plastique, par exemple en polyamide 11.

Ce conduit est recouvert d'une armure 2 de résistance à la pression, qui dans l'exemple illustré, est constitué par l'enroulement d'un profilé préformé, enroulé hélicoïdalement sous un angle dépassant, par exemple, 85° par rapport à l'axe de la conduite.

L'ensemble est recouvert d'une armure 3 de résistance à la traction constituée de deux nappes croisées 3a et 3b de profilés ou élément allongé enroulées hélicoïdalement avec des pas opposés dans les deux nappes.

Le plus souvent, l'angle d'enroulement de ces profilés a une valeur comprise entre 20° et 50° par rapport à l'axe de la conduite.

Une gaine externe 4, par exemple en polyamide 11 ou en polyéthylène, recouvre l'ensemble ainsi constitué.

Un autre type de conduite flexible armée est illustré par la figure 2.

Les mêmes références numériques ont été utilisées sur cette figure pour désigner les éléments analogues à ceux illustrés par la figure 1.

Dans ce deuxième type de conduite flexible, l'armure de résistance à la traction comprend deux couples de nappes croisées 3a, 3b et 3c, 3d de profilés enroulées en hélice sous un angle pouvant être compris entre 20 et 50° par rapport à l'axe de la conduite.

Dans le type de conduite illustré par la figure 3, une carcasse en acier 5 a été disposée à l'intérieur du conduit 1 en matière plastique et les nappes 2a et 2b de l'armure de résistance à la pression interne ont été disposées de part et d'autre de l'armure 3a, 3b de résistance à la traction.

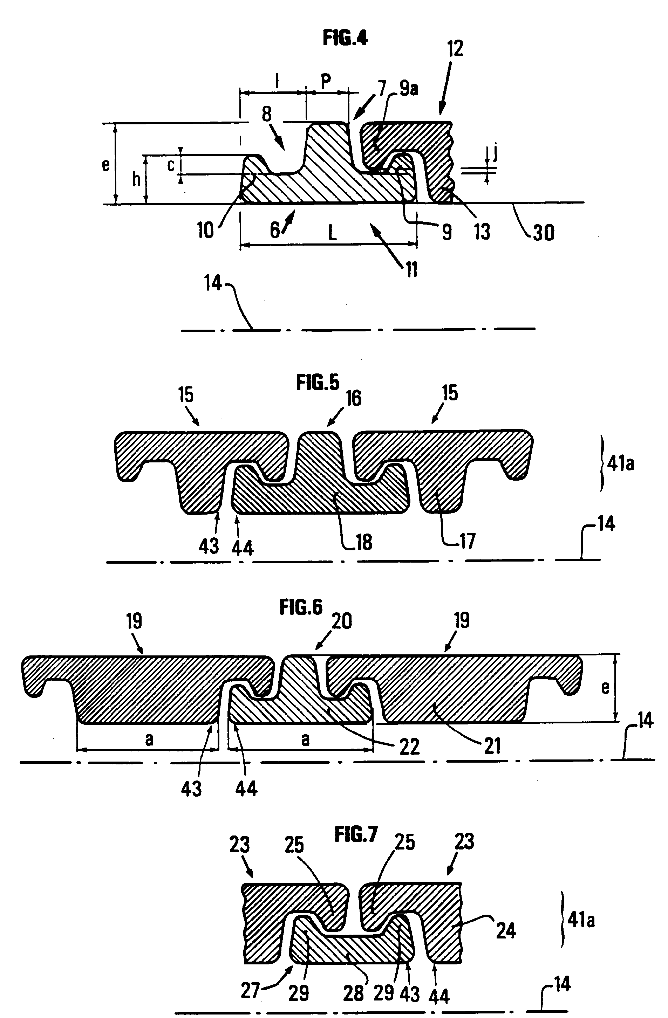

Selon l'invention, au moins une nappe de profilés enroulés ou éléments allongés possède un profil en "T" tel que représenté à la figure 4.

Sur cette figure 4, qui est une section droite d'un élément allongé, la lettre L désigne la largeur du "T", elle correspond à la tête 6 du "T", la lettre e désigne la hauteur du "T". La lettre P désigne la largeur du pied 7 du "T". La lettre l désigne la longueur du bras 8 du "T". La lettre h désigne la hauteur ou épaisseur d'un bras 8 du "T". La lettre c désigne la hauteur du lobe 9 du bras 8 du "T".

Le trait en pointillé 10 correspond à un profil en "T" ne possèdant pas de lobe pour lequel c est nul.

La référence 11 désigne la section du "T" dans son ensemble, cette section appartient à un élément allongé donné. La référence 12 désigne le profil en "T" d'un autre élément allongé qui coopère avec l'élément allongé donné. Ces deux éléments allongés sont disposés tête-bêche, c'est-à-dire que pour l'un le pied 7 du profil en "T" est orienté vers l'extérieur du tube, et pour l'autre, le pied 13 est orienté vers l'axe 14 du tube. Ces éléments allongés sont considérés comme complémentaires l'un de l'autre.

Lorsque ces éléments possèdent des profils comportant des bras à lobe 9, il y a accrochage axial des profils, c'est-à-dire que le déplacement axial d'un profil 11 par rapport au profil adjacent 12 est limité lors de l'éloignement de ces deux profils, l'un par rapport à l'autre. Ainsi, les lobes correspondent à des moyens d'accrochage ou d'agrafage.

Bien entendu, le rapprochement de ces deux profils est limité par le bord d'un lobe 9 de "T" qui bute sur le pied 13 adjacent.

La figure 5 représente le cas d'une nappe comportant deux éléments allongés 15 et 16 ayant mêmes sections droites 17 et 18 montées tête-bêche. Comme cela apparait sur la figure 5, on retrouve alternativement les éléments allongés 15 et 16, chaque spire de l'élément 15 étant encadré par des spires de l'élément 16 et chaque spire de l'élément 16 étant encadré par des spires de l'élément 15.

La figure 6 représente le cas où les deux éléments allongés 19 et 20 ont des sections droites 21 et 22 différentes, mais sur cette figure, les deux profils 21 et 22 ont même hauteur e.

De plus, sur cette figure, la largeur L du profil en "T" 22 de l'élément allongé 20 a sensiblement la même valeur a que la largeur p du pied du profil en "T" 21 de l'élément allongé 19 (Fig. 6).

Par ailleurs, on ne sortira pas du cadre de la présente invention si les deux éléments allongés ont des caractéristiques mécaniques différentes, notamment en ce qui concerne le module d'élasticite, ou sont réalisés dans des matériaux différents.

Ainsi, l'élément allongé 20 pourra avoir un module d'élasticité supérieur à celui de l'élément allongé 19.

Sur la figure 6, la référence 14 désigne l'axe du flexible.

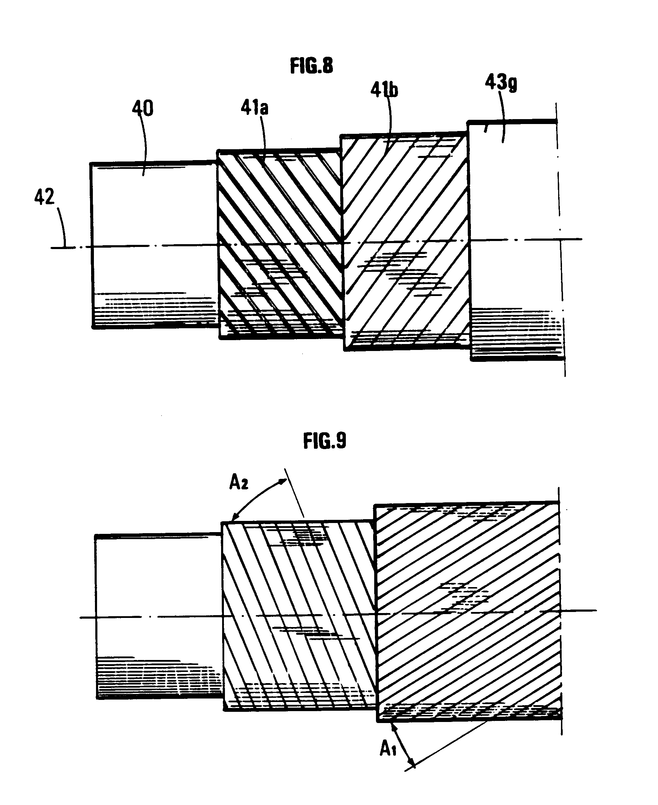

La figure 7 représente le cas d'un élément allongé 23 ayant un profil en forme de "T" 24 à lobe 25, où l'élément allongé 23 est enroulé hélicoïdalement de manière jointive, c'est-à-dire qu'un bord d'un bras de l'élément allongé est en contact ou presque avec l'autre bord de la spire adjacente de cet élément allongé.

L'accrochage de l'élément allongé 23 se fait par un élément allongé complémentaire 27 ayant un profil en "U" 28.

La référence 14 désigne l'axe du tube flexible. Sur la figure 7, les bras 29 du "U" s'éloignent de l'axe 14.

On ne sortira pas du cadre de la présente invention si les éléments allongés sont montés dans le sens inverse, c'est-à-dire que les bras du "U" soient dirigés vers l'axe du tube.

Les éléments allongés 23 et 27 pourront être métalliques, par exemple en acier et/ou en aluminium.

Par ailleurs, on ne sortira pas du cadre de la présente invention si l'élément allongé à profil en "T" est constitué d'un métal et que l'élément allongé à profil en "U" est constitué en matériau plastique, tel un thermoplastique.

L'élément allongé ayant une section droite ou profil "T" du tube flexible selon l'invention respectera de préférence une ou plusieurs des fourchettes suivantes :

* $0,5 \leq \dfrac{l}{e} \leq 1$ et de préférence $0,66 \leq \dfrac{L}{e} \leq 1$

* $1 \leq \dfrac{P}{l} \leq 3$

* $0,66 \leq \dfrac{P}{e} \leq 3$

* $1,66 \leq \dfrac{L}{e} \leq 5$

* $0,66 \leq \dfrac{h}{e} \leq 0,83$

* $0,16 \leq \dfrac{c}{e} \leq 0,66$ et de préférence voisin de 0,33

* jeu radial compris en 2 % et 10 %.

Par jeu radial, on entend la distance parcourue radialement par le profil en "T" avant qu'il ne soit immobilisé par le profil adjacent immobile rapporté à la hauteur e du profil en "T".

Le point de départ de ce déplacement étant une ligne droite sur laquelle s'appuient le profil en "T" et le profil adjacent, ce jeu est désigné par la référence j sur la figure 4 et la ligne droite d'appui porte la référence 30.

Cette ligne droite correspond sensiblement à la génératrice du cylindre sur lequel sont enroulés ces éléments allongés, du moins lorsque l'angle d'enroulement est important.

Une estimation du comportement de deux éléments allongés ayant des sections droites ou profils en forme de "T" identiques et emboîtés tête-bêche (Fig. 5) a été réalisée, le diamètre interne étant fixé à 95,4 mm.

Ces éléments allongés étant en acier, le module d'Young des éléments allongés est de 200 MPa, le coefficient de Poisson de 0/3.

Le profil en "T" étant caractérisé par L = 14,2 ; e = 6,2 ; P = 2,85 ; l = 5,67 ; h = 3,80 ; c = 1,64. Sous une pression interne de 20 MPa, le déplacement radial du fil 16 est de 0,060 mm, celle du fil 15 est de 0,0085 mm. Les deux profils ne sont donc pas en contact, ceci pour un jeu de 0,246 mm.

Le jeu étant de 0,246, le contact se produit pour une pression interne de 95 MPa.

Pour une pression interne de 20 MPa, les contraintes circonférentielles du fil 15 se situent à un niveau moyen de 33 MPa. Elles varient de + 18 % autour de cette valeur en fonction de la position dans la section droite en "T".

Le niveau moyen des contraintes circonférentielles du fil 16 est de 235 MPa et les contraintes varient de + 6 % autour de cette valeur.

Le profil en "T" tel que décrit dans la présente invention est particulièrement bien adapté aux armures de pression 2 et peut avoir avantageusement un angle d'enroulement égal ou supérieur à 55°.

On pourra également utiliser avantageusement le profil en "T" pour réaliser la carcasse interne, tel que 5 à la figure 5.

La figure 8 représente un mode de réalisation d'un flexible particulièrement avantageux présentant un tube interne 40 pouvant être constitué en matière plastique par exemple en polyamide 11, une armure 41 composée de deux nappes croisées 41a et 41b enroulées hélicoïdalement sous un angle de 55° par rapport à l'axe 42 du flexible.

Ainsi, ces deux nappes 41a et 41b forment une paire de nappes, chacune de ces nappes comportant des éléments allongés enroulés sous un même angle, dans ce cas de 55°, mais chacune de ces nappes étant enroulées dans un sens opposé et symétrique l'un de l'autre.

Au moins l'une de ces deux nappes, et notamment la nappe interne 41a, comporte une pluralité de profilés en "T" agrafables. Ces profils peuvent être agrafés par un nombre égal de profilés complémentaires présentant une section ou profil soit en "T" comme représenté à la figure 5, soit en "U" comme représenté à la figure 7 que les bras du "U" soient orientés ou non vers l'axe du tube.

La couche 41b peut avoir la même structure ou être un fils plat, rond ou d'une autre forme présentant ou ne présentant pas d'agrafage. Ce fils est enroulé sous un angle voisin de 55°.

La référence 43g désigne une gaine externe pouvant être en polyamide 11.

Le flexible représenté à la figure 8 permet de résister à la pression interne du fluide, d'encaisser l'effet de fond sans adjonction d'armure de renfort à la pression, tel que défini ci-dessus dans la présente description.

Selon une variante du mode de réalisation représenté à la figure 8, le tube flexible pourra comporter une carcasse interne agrafée comportant au moins un élément allongé agrafable ayant ou non un profil en forme de "T".

Le fait que la nappe interne 41a soit agrafée présente un intérêt tout particulier en ce qui concerne la tenue mécanique du tube 40, notamment du fait du jeu axial limité et des formes arrondies 43 et 44 des arêtes des profilés en contact avec le tube 40. Les formes arrondies apparaissent dans les sections droites des profilés, voir figures 5 et 7 notamment.

Lorsque le flexible selon l'invention comporte une armure de renfort résistant à la pression et une armure de résistance à la traction, cette dernière pourra comporter une pluralité d'éléments allongés enroulés sous un angle inférieur à 55°, par exemple de 25° ou 30° par rapport à l'axe du flexible, du moins lorsque l'armure de renfort à la pression comporte au moins un élément allongé enroulé à un angle élevé par rapport à l'axe du flexible et notamment supérieur à 80° ou 85°.

On ne sortira pas du cadre de la présente invention si les couples de nappes croisées d'une même armure n'ont pas des angles symétriques par rapport à l'axe du flexible.

Ainsi, selon la présente invention, l'armure de résistance à la traction pourra comporter un couple de nappes enroulées à des angles respectivement de A1 et A2 considéré de part et d'autre de l'axe du flexible. La détermination de A1 et A2 peut résulter notamment du document antérieur FR-2.374.580. Par exemple, A1 pourra être voisin de 30° et A2 de 70° comme représenté à la figure 9.

D'autres configurations sont possibles et l'on peut choisir des angles de A1 = 54° et A2 = 56°.

On ne sortira pas du cadre de la présente invention lorsque le ou les profilés en "T" ne comportent pas d'élément d'accrochage. Lorsque les bras des "T" ont une forme rectangulaire, donc sans moyen d'accrochage, et que une fois en position sur le flexible, les pieds de "T" sont orientés dans le même sens, on pourra utiliser un fil complémentaire rectangulaire pour occuper l'espace séparant les pieds du "T" successifs axialement.

## Revendications

1.  Tube flexible armé comportant au moins un élément de renfort allongé enroulé hélicoïdalement, caractérisé en ce que ledit élément allongé a une section droite, ou profil, présentant une forme de "T" .

2.  Tube selon la revendication 1, caractérisé en ce que ledit élément allongé est métallique.

3.  Tube selon l'une des revendications 1 ou 2, caractérisé en ce qu'un bord au moins dudit élément allongé a une forme adaptée à coopérer avec une forme complémentaire pour réaliser un accrochage.

4.  Tube selon l'une des revendications précédentes, caractérisé en ce qu'il comporte deux éléments allongés ayant chacun une section droite présentant une forme de "T", lesdits éléments étant enroulés hélicoïdalement dans le même sens, le premier ayant sa partie de la section droite correspondant au pied du "T" dirigée vers l'axe du tube et la partie similaire du deuxième élément étant dirigée dans le sens opposé.

5.  Tube selon la revendication 3, caractérisé en ce que ladite forme complémentaire est portée par le bord d'un élément allongé ayant une section droite présentant une forme de "U".

6.  Tube selon la revendication 5, caractérisé en ce que ledit élément allongé ayant une section droite présentant une forme de "U" est placé de façon à ce que les branches dudit "U" soient dirigées vers l'axe du tube.

7.  Tube selon la revendication 4, caractérisé en ce que lesdits premier et deuxième éléments allongés sont de sections ayant les mêmes dimensions.

8.  Tube selon l'une des revendications 4 ou 7, caractérisé en ce que le premier élément allongé a un module d'élasticité plus faible que celui du deuxième élément.

9. Tube selon l'une des revendications 4 ou 7, caractérisé en ce que le premier et le deuxième éléments allongés ont le même module d'élasticité.

10. Tube selon la revendication 4, caractérisé en ce que la largeur de ladite partie du premier élément correspondant au pied du "T" est supérieur à la largeur de la partie similaire du deuxième élément.

11. Tube selon l'une des revendications précédentes, caractérisé en ce qu'il comporte au moins un élément allongé en acier ayant un profil en "T".

12. Tube selon l'une des revendications 1 à 10, caractérisé en ce qu'il comporte au moins un élément de renfort allongé en aluminium ayant un profil en "T".

13. Tube selon la revendication 1, caractérisé en ce que le rapport de la longueur (l) du bras du "T" sur sa hauteur (e) est compris entre 0,5 et 1 et est préférentiellement compris entre 0,66 et 1.

14. Tube selon l'une des revendications 1 ou 13, , caractérisé en ce que le rapport de la largeur du pied (P) à la longueur du bras (l) est compris entre 1 et 3.

15. Tube selon l'une des revendications 1, 13 et 14, caractérisé en ce que le rapport entre la largeur du pied (P) à la hauteur du "T" (e) est compris entre 0,66 et 3.

16. Tube selon l'une des revendications 1, 13 à 15, caractérisé en ce que le rapport entre la largeur (L) du à la hauteur (E) du "T" est compris entre 1,66 et 5.

17. Tube selon l'une des revendications 1, et 13 à 16, caractérisé en ce que le rapport entre la hauteur (h) d'un bras à la hauteur du "T" (e) est compris entre 0,66 et 0,83.

18. Tube selon l'une des revendications 2 et 13 à 17, caractérisé en ce que le rapport entre la hauteur d'un lobe du bras (C) à la hauteur (e) du "T" est compris entre 0,16 et 0,66 et est préférentiellement voisin de 0,33.

19. Tube selon l'une des revendications 4 et 13 à 18, caractérisé en ce que le rapport du jeu radial entre deux "T" emboîtés tête-bêche l'un dans l'autre à la largeur du "T" est compris entre 2 % et 10 %.

20. Tube selon l'une des revendications précédentes, caractérisé en ce qu'il comporte une armure de résistance à la pression interne, ou voûte, constituée d'au moins un élément allongé ayant un profil en forme de "T".

21. Tube selon l'une des revendications précédentes, caractérisé en ce qu'il comporte une carcasse interne de résistance à la pression externe constituée d'au moins un élément allongé ayant un profil en forme de "T".

22. Tube selon l'une des revendications 5 ou 6, caractérisé en ce que ledit élément allongé ayant une section droite présentant une forme de "U" est en plastique.

23. Tube selon l'une des revendications 5 ou 6, caractérisé en ce que ledit élément allongé ayant une section droite présentant une forme de "U" est en métal.

24. Tube selon la revendication 20, caractérisé en ce que ledit profil en "T" présente un angle d'armage sensiblement supérieur à 80° et de préférence à 85°, par rapport à l'axe du flexible.

25. Tube selon l'une des revendications précédentes comportant au moins une nappe de renfort, caractérisé en ce qu'il comporte une gaine d'étanchéité interne venant prendre appui sur ladite nappe ou nappe interne et en ce que ladite nappe interne comporte une pluralité d'éléments allongés ayant un profil en "T", ladite nappe interne comportant des moyens d'accrochage axiaux.

26. Tube selon la revendication 25, caractérisé en ce qu'il comporte plusieurs nappes de renfort et en ce que, seule, ladite nappe interne comporte des moyens d'accrochage axiaux.

27. Tube selon l'une des revendications 25 ou 26, caractérisé en ce qu'il comporte deux nappes de renfort dont l'une correspond à ladite nappe interne, en ce que les éléments allongés de ladite nappe interne sont enroulés sous un premier angle dans un premier sens relativement à l'axe du tube, et en ce que les éléments allongés de la deuxième nappe sont enroulés sous un deuxième angle en sens opposé, et en ce que l'un desdits angles est supérieur ou sensiblement égal à 55° et l'autre est inférieur ou sensiblement égal à 55°.

28. Tube selon l'une des revendications 25 à 26, caractérisé en ce qu'il comporte deux paires de nappes, l'une de ces nappes correspondant à ladite nappe interne, chacune des nappes d'une même paire comportant d'éléments de renfort allongés enroulés sous des angles égaux, mais de sens opposé, et en ce que ledit angle de l'une desdites paires est supérieure ou sensiblement égale à 55° et en ce que ledit angle de l'autre paire est inférieure ou sensiblement égale à 55°.

29. Fil ou élément de renfort allongé convenant à la fabrication de tubes flexibles armés, caractérisé en ce que ledit fil a un profil en "T" et en ce que la matière et/ou la géométrie du profil dudit fil correspond à celle décrite dans l'une de revendications 1, 2, 3 ou 11 à 19.

**Patentansprüche**

1. Flexibles armiertes Rohr mit wenigstens einem länglichen, wendelförmig gewickelten Verstärkungselement, dadurch gekennzeichnet, daß dieses längliche Element einen Querschnitt oder ein Profil hat, der, bzw. das, eine "T"-Gestalt aufweist.

2. Rohr nach Anspruch 1, dadurch gekennzeichnet, daß das längliche Element metallisch ist.

3. Rohr nach Anspruch 1 oder 2, dadurch gekennzeichnet, daß wenigstens ein Rand dieses länglichen Elements eine Form hat, die so ausgebildet ist, daß sie mit einer komplementären Form zur Realisierung einer Verhakung zusammenwirkt.

4. Rohr nach einem der vorhergehenden Ansprüche, dadurch gekennzeichnet, daß es 2 längliche Elemente umfasst, die je einen Querschnitt in "T"-Gestalt haben, wobei diese Elemente wendelförmig im gleichen Sinn gewikkelt sind, das erste seinen Teil mit dem Querschnitt entsprechenden Fuß des "T" gegen die Achse des Rohres gerichtet hat und seinen, dem zweiten Element ähnlichen Teil in der entgegengesetzten Richtung gerichtet hat.

5. Rohr nach Anspruch 3, dadurch gekennzeichnet, daß diese komplementäre Form getragen ist durch den Rand eines länglichen Elements mit einem Querschnitt von "U"-Gestalt.

6. Rohr nach Anspruch 5, dadurch gekennzeichnet, daß dieses längliche Element, das einen Querschnitt in einer "U"-Form aufweist, derart angeordnet ist, daß die Schenkel des "U" gegen die Achse des Rohrs gerichtet sind.

7. Rohr nach Anspruch 4, dadurch gekennzeichnet, daß diese ersten und zweiten länglichen Elemente, Querschnitte, die die gleiche Dimension haben, sind.

8. Rohr nach einem der Ansprüche 4 oder 7, dadurch gekennzeichnet, daß das erste längliche Element einen Elastizitätsmodul aufweist, der geringer als der des zweiten Elements ist.

9. Rohr nach einem der Ansprüche 4 oder 7, dadurch gekennzeichnet, daß die ersten und zweiten länglichen Elemente den gleichen Elastizitätsmodul haben.

10. Rohr nach Anspruch 4, dadurch gekennzeichnet, daß die Breite dieses Teils des ersten Elements entsprechend dem Fuß des "T" größer als die Breite des ähnlichen Teils des zweiten Elementes ist.

11. Rohr nach einem der vorhergehenden Ansprüche, dadurch gekennzeichnet, daß es wenigstens ein längliches Element aus Stahl mit einem "T"-Profil umfasst.

12. Rohr nach einem der Ansprüche 1 bis 10, dadurch gekennzeichnet, das es wenigstens ein längliches Verstärkungselement aus Aluminium mit einem Profil in "T"-Form umfasst.

13. Rohr nach Anspruch 1, dadurch gekennzeichnet, daß das Verhältnis der Länge (l) des Schenkels des "T" zu seiner Höhe (e) zwischen 0,5 und 1 und vorteilhaft zwischen 0,66 und 1 ist.

14. Rohr nach einem der Ansprüche 1 oder 13, dadurch gekennzeichnet, daß das Verhältnis der Breite des Fusses (P), zur Länge des Schenkels (l), zwischen 1 und 3 liegt.

15. Rohr nach einem der Ansprüche 1, 13 und 14, dadurch gekennzeichnet, daß das Verhältnis zwischen der Breite des Fusses (P) zur Höhe des "T" (e) zwischen 0,66 und 3 beträgt.

16. Rohr nach einem der Ansprüche 1, 13-15, dadurch gekennzeichnet, daß das Verhältnis zwischen der Breite (l) zur Höhe (E) des "T" zwischen 1,66 und 5 beträgt.

17. Rohr nach einem der Ansprüche 1 und 13-16, dadurch gekennzeichnet, daß das Verhältnis zwischen der Höhe (h) eines Arms zur Höhe "T" (e) zwischen 0,66 und 0,83 beträgt.

18. Rohr nach einem der Ansprüche 2 und 13-17, dadurch gekennzeichnet, daß das Verhältnis zwischen der Höhe eines Ansatzes des Arms (C) zur Höhe (e) des "T" zwischen 0,16 und 0,66 und vorteilhaft benachbarten 0,33 beträgt.

19. Rohr nach einem der Ansprüche 4 und 13-18, dadurch gekennzeichnet, daß das Verhältnis des Radialspiels zwischen 2 "Kopf bei Fuß" ineinander gesetzten "T"'s zur Breite des "T" zwischen 2% und 10% beträgt.

20. Rohr nach einem der vorgehenden Ansprüche, dadurch gekennzeichnet, daß es eine innendruckbeständige Armierung oder Wute, bzw. Wölbung, gebildet durch wenigstens ein längliches Element mit einem Profil in "T"-Gestalt umfasst.

21. Rohr nach einem der vorgehenden Ansprüche, dadurch gekennzeichnet, daß es eine außendruckbeständige Innenkarkasse umfasst, die durch wenigstens ein länliches Element mit einem Profil in "T"-Gestalt gebildet ist.

22. Rohr nach einem der Ansprüche 5 oder 6, dadurch gekennzeichnet, daß diese längliche Element mit einem Querschnitt in der Gestalt eines "U" aus Kunststoff, insbesondere Plast, besteht.

23. Rohr nach einem der Ansprüche 5 oder 6, dadurch gekennzeichnet, daß dieses längliche Element, das einen Querschnitt von "U"-Gestalt hat, aus Metall besteht.

24. Rohr nach Anspruch 20, dadurch gekennzeichnet, daß dieses "T"-Profil einen Winkel der Armierung aufweist, der im wesentlichen größer als 80°, und vorzugsweise 85°, bezogen auf die Achse des flexiblen Rohres ist.

25. Rohr nach einem der vorgehenden Ansprüche mit wenigstens einer Verstärkungsbahn, dadurch gekennzeichnet, daß es eine Innendichtungshülle umfasst, die sich gegen diese Bahn oder Innenbahn abstützt und daß diese Innenbahn eine Vielzahl länglicher Elemente mit einem Profil von "T"-Gestalt umfasst, wobei diese Innenbahn axiale Verhakungsmittel umfasst.

26. Rohr nach Anspruch 25, dadurch gekennzeichnet, daß es mehrere Verstärkungsbahnen umfasst und daß alleine diese Innenbahn axiale Verhakungsmittel umfasst.

27. Rohr nach einem der Ansprüche 25 und 26, dadurch gekennzeichnet, daß es zwei Verstärkungsbahnen umfasst, von denen die eine dieser Innenbahn entspricht, daß diese länglichen Elemente dieser Bahn unter einem ersten Winkel in einer ersten Richtung relativ zur Achse des Rohrs gewickelt sind und daß die länglichen Elemente der zweiten Bahn unter einem zweiten Winkel von entgegengesetztem Sinn gewickelt sind und daß einer dieser Winkel größer oder im wesentlichen gleich 55°, und der andere kleiner und oder im wesentlichen gleich 55°ist.

28. Rohr nach einem der Ansprüche 25 bis 26, dadurch gekennzeichnet, daß es 2 Paare von Bahnen umfasst, wobei eine dieser Bahnen dieser Innenbahn entspricht, wobei jede der Bahnen ein und des gleichen Paares längliche Verstärkungselemente umfasst, die unter gleichen Winkeln, jedoch von entgegengesetztem Sinn, gewickelt sind, und daß dieser Winkel eines dieser Paare größer oder im wesentlichen gleich 55° und daß dieser Winkel des anderen Paares kleiner oder im wesentlichen gleich 55° ist.

29. Draht, Faden oder Verstärkungselement in jeglicher Gestalt, das sich zur Herstellung armierter, flexibler Rohre eignet, dadurch gekennzeichnet, daß dieser Draht ein Profil von "T"-Gestalt hat und daß das Material und/oder die Geometrie des Profils dieses Drahtes derjenigen entspricht, die in einem der Ansprüche 1,2,3 oder 11-19 beschrieben ist.

**Claims**

1. Flexible reinforced tube comprising at least one elongated reinforcing element wound helically, characterised in that the said elongated element has a cross section or profile in the form of a T.

2. Tube in accordance with claim 1, characterised in that the said elongated element is made from metal.

3. Tube in accordance with one of claims 1 or 2, characterised in that at least one edge of the said elongated element has a shape designed to co-operate with a complementary shape in order to produce a fixing or lock.

4. Tube in accordance with one of the preceding claims, characterised in that it comprises two elongated elements each having a cross section in the form of a T shape, the said elements being wound helically in the same direction, the first having that part of its cross section corresponding to the base of the T shape directed towards the axis of the tube and the similar part of the second element being directed in the opposite direction.

5. Tube in accordance with claim 3, characterised in that the said complementary shape is held by the edge of an elongated element having a cross section in the shape of a U.

6. Tube in accordance with claim 5, characterised in that the said elongated element having a cross section in the shape of a U is positioned so that the legs of the said U are directed towards the axis of the tube.

7. Tube in accordance with claim 4, characterised in that the said first and second elongated elements have cross sections with the same dimensions.

8. Tube in accordance with one of claims 4 or 7, characterised in that the first elongated element has a lower modulus of elasticity than that of the second element.

9. Tube in accordance with one of claims 4 or 7, characterised in that the first and the second elongated elements have the same modulus of elasticity.

10. Tube in accordance with claim 4, characterised in that the width of that part of the said first element corresponding to the base of the T shape exceeds the width of the similar part of the second element.

11. Tube in accordance with one of the preceding claims, characterised in that it includes at least one elongated element made from steel and having a T shaped profile.

12. Tube in accordance with one of claims 1 to 10, characterised in that it comprises at least one elongated reinforcing element made from aluminium and having a T shaped profile.

13. Tube in accordance with claim 1, characterised in that the ratio between the length (l) of the arm of the T shaped section and its height (e) is between 0.5 and 1 and preferentially between 0.66 and 1.

14. Tube in accordance with one of claims 1 or 13, characterised in that the ratio between the width of the base (P) and the length of the arm (l) is between 1 and 3.

15. Tube in accordance with one of claims 1, 13 and 14, characterised in that the ratio between the widths of the base (P) and the height (e) of the T shaped section is between 0. 66 and 3.

16. Tube in accordance with one of claims 1, 13 to 15, characterised in that the ratio between the width (L) and the height (E) of the T shaped section is between 1. 66 and 5.

17. Tube in accordance with one of claims 1 and 13 to 16, characterised in that the ratio between the height (h) of an arm and the height (e) of the T shaped section is between 0. 66 and 0. 83.

18. Tube in accordance with one of claims 2 and 13 to 17, characterised in that the ratio between the height of the lobe of an arm (C) and the height (e) of the T shaped section is between 0.16 and 0.66 and, preferentially, approximately 0.33.

19. Tube in accordance with one of claims 4 and 13 to 18, characterised in that the ratio for the radial clearance between two T shaped sections fitted head to tail and the width of the T shaped section is between 2% and 10%.

20. Tube in accordance with one of the preceding claims, characterised in that it comprises an armoured sheath which is resistant to internal pressure, or an arched surface, comprising at least one elongated element having a T shaped profile.

21. Tube in accordance with one of the preceding claims, characterised in that it comprises an internal casing resistant to the external pressure and comprising at least one elongated element having a T shaped profile.

22. Tube in accordance with one of claims 5 or 6, characterised in that the said elongated element has a cross section in the shape of a U and made from a plastic material.

23. Tube in accordance with one of claims 5 or 6, characterised in that the said elongated element has a cross section in the shape of a U and made from metal.

24. Tube in accordance with claim 20 characterised in that the said T shaped profile has an angle of reinforcement substantially exceeding 80° and preferably 85° relative to the axis of the flexible tube.

25. Tube in accordance with one of the preceding claims, comprising at least one reinforcing layer, characterised in that it comprises an internal sealing sheath which is in contact with the said layer or internal layer and in that the said internal layer comprises a number of elongated elements having a T shaped profile, the said internal layer comprising a means of axial fixing or locking.

26. Tube in accordance with claim 25, characterised in that it comprises several reinforcing layers and in that only the said internal layer comprises a means of axial fixing or locking.

27. Tube in accordance with one of claims 25 or 26, characterised in that it comprises two reinforcing layers, one corresponding to the said internal layer and in that the elongated elements for the said internal layer are wound at a first angle in a first direction relative to the axis of the tube and in that the elongated elements for the second layer are wound at a second angle in the opposite direction and in that one of the said angles is greater than or is substantially equal to 55° and the other is less than or is substantially equal to 55°.

28. Tube in accordance with one of claims 25 to 26, characterised in that it comprises two pairs of layers, one of these layers corresponding to the said internal layer, each of the layers of the same pair comprising elongated reinforcing elements wound at equal angles but in opposite directions and in that the said angle of one of the said pairs is greater than or substantially equal to 55° and in that the said angle of the other pair is less than or substantially equal to 55°.

29. Wire or elongated reinforcing element suitable for the manufacture of reinforced flexible tubes, characterised in that the said wire has a T shaped profile and in that the material and/or the geometry of the profile of the said wire corresponds to that described in one of claims 1, 2, 3 or 11 to 19.

## FIG.1

1    2    3a 3b    4

3

## FIG.2

4    3d 3c    3b 3a    2    1

## FIG.3

4    2b 3b    3a 2a    1    5

**FIG.4**

**FIG.5**

**FIG.6**

**FIG.7**

FIG.8

40    41a    41b    43g

42

FIG.9

A₂

A₁